(19) Europäisches Patentamt
European Patent Office
Office européen des brevets

(11) **EP 4 123 527 A1**

(12) **EUROPEAN PATENT APPLICATION**
published in accordance with Art. 153(4) EPC

(43) Date of publication:
**25.01.2023 Bulletin 2023/04**

(21) Application number: **21916645.1**

(22) Date of filing: **17.11.2021**

(51) International Patent Classification (IPC):
**G06Q 10/06** *(2012.01)*        **G06Q 10/02** *(2012.01)*
**G06Q 30/06** *(2012.01)*

(86) International application number:
**PCT/CN2021/131178**

(87) International publication number:
**WO 2022/257357 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.06.2021 CN 202110633451**

(71) Applicant: **BEIJING BAIDU NETCOM SCIENCE
TECHNOLOGY CO., LTD.
Beijing 100085 (CN)**

(72) Inventors:
• **ZHANG, Hao
Beijing 100085 (CN)**
• **ZHOU, Jingbo
Beijing 100085 (CN)**
• **HUANG, Jizhou
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **ONLINE CAR-HAILING INFORMATION PROCESSING METHOD AND APPARATUS, AND DEVICE AND COMPUTER STORAGE MEDIUM**

(57)     An online ride-hailing information processing method and apparatus, a device, and a computer storage medium, relating to big data computing and deep learning technologies in the field of AI technologies, are disclosed. A specific solution involves: acquiring an online ride-hailing query condition including information of an origin and a destination sent by a client; determining a query time range according to the query condition; calculating cost information of arrival at the destination departing at a plurality of times in the query time range respectively; determining, according to the cost information of arrival at the destination departing at the plurality of times, a time meeting the query condition as a recommended departure time; determining a recommended order-sending time according to the recommended departure time; and returning a query result to the client, the query result including the recommended order-sending time, or further including cost information corresponding to the recommended order-sending time. According to the present disclosure, users can select a low-cost order-sending time, which improves user experience, saves network resources, and reduces the influence on system performance.

FIG. 2

## Description

This application claims priority to Chinese Patent Application No. 202110633451.9, filed on June 7, 2021, and entitled "ONLINE RIDE-HAILING INFORMATION PROCESSING METHOD AND APPARATUS, DEVICE, AND COMPUTER STORAGE MEDIUM".

## TECHNICAL FIELD

The present disclosure relates to the field of computer application technologies, and in particular, to big data computing and deep learning technologies in the field of artificial intelligence technologies.

## BACKGROUND

With the development of mobile Internet, the emergence of an online ride-hailing platform has greatly changed people's lives. The online ride-hailing platform puts drivers in need of receiving orders with passengers in need of ride hailing on an online platform. After a passenger sends an order (hereinafter referred to as "order sending"), the online ride-hailing platform may effectively match a driver within a certain distance from the passenger, and the matched driver receives the order and picks up the passenger to a destination designated in the order. Online ride hailing has advantages of being ready to go, efficient and in no need of worrying about parking.

Passengers may inevitably consider costs of online ride hailing in practical scenarios. For example, at present, an online ride-hailing client may give a user an estimated cost of ride hailing at a current time for a passenger's reference after the passage enters an origin and a destination. However, the passenger can only consider accordingly whether to perform ride hailing currently. If current ride hailing is at a high cost due to road conditions or other problems, the passenger may either give up or try to acquire an estimated ride-hailing cost later. This inevitably brings inconvenience to the passenger and is inefficient, and the users' repeated attempts to estimate the ride-hailing cost also waste network resources and put pressure on system performance.

## SUMMARY

In view of the above, the present disclosure provides an online ride-hailing information processing method and apparatus, a device, and a computer storage medium, so as to facilitate a user to select a low-cost order-sending time, which improves user efficiency and experience, saves network resources, and reduces the pressure on system performance.

According to a first aspect of the present disclosure, an online ride-hailing information processing method is provided, including:

acquiring an online ride-hailing query condition sent by a client, the query condition including information of an origin and a destination;

determining a query time range according to the query condition;

calculating cost information of arrival at the destination departing at a plurality of times in the query time range respectively;

determining, according to the cost information of arrival at the destination departing at the plurality of times, a time meeting the query condition as a recommended departure time;

determining a recommended order-sending time according to the recommended departure time; and

returning a query result to the client, the query result including the recommended order-sending time, or the query result including the recommended order-sending time and cost information corresponding to the recommended order-sending time.

According to a second aspect of the present disclosure, an online ride-hailing information processing method is provided, including:

acquiring an online ride-hailing query condition entered by a user, the query condition including information of an origin and a destination;

sending the query condition to a server, and acquiring a query result returned by the server, the query result including a recommended order-sending time, or the query result including a recommended order-sending time and cost information corresponding to the recommended order-sending time; and

displaying the query result.

According to a third aspect of the present disclosure, an online ride-hailing information processing apparatus is provided, including:

a condition receiving unit configured to acquire an online ride-hailing query condition sent by a client, the query condition including information of an origin and a destination;

a time range determination unit configured to determine a query time range according to the query condition;

a cost calculation unit configured to calculate cost information of arrival at the destination departing at a plurality of times in the query time range respectively;

a first recommendation unit configured to determine, according to the cost information of arrival at the destination departing at the plurality of times, a time meeting the query condition as a recommended departure time;

a second recommendation unit configured to determine a recommended order-sending time according to the recommended departure time; and

a result return unit configured to return a query result to the client, the query result including the recommended order-sending time, or the query result including the recommended order-sending time and cost information corresponding to the recommended order-sending time.

According to a fourth aspect of the present disclosure, an online ride-hailing information processing apparatus is provided, including:

a condition acquisition unit configured to acquire an online ride-hailing query condition entered by a user, the query condition including information of an origin and a destination;
a server interaction unit configured to send the query condition to a server , and acquire a query result returned by the server, the query result including a recommended order-sending time, or the query result including a recommended order-sending time and cost information corresponding to the recommended order-sending time; and
a result display unit configured to display the query result.

According to a fifth aspect of the present disclosure, an electronic device is provided, including:

at least one processor; and
a memory in communication connection with the at least one processor; and
the memory stores instructions executable by the at least one processor, and the instructions are executed by the at least one processor to enable the at least one processor to perform the method as described above.

According to a sixth aspect of the present disclosure, a non-transitory computer-readable storage medium storing computer instructions is provided, and the computer instructions are configured to cause a computer to perform the method as described above.
According to a seventh aspect of the present disclosure, a computer program product is provided, including a computer program, wherein, when the computer program is executed by a processor, the method as described above is performed.
It should be understood that the content described in this part is neither intended to identify key or significant features of the embodiments of the present disclosure, nor intended to limit the scope of the present disclosure. Other features of the present disclosure will be made easier to understand through the following description.

**BRIEF DESCRIPTION OF THE DRAWINGS**

The accompanying drawings are intended to provide a better understanding of the solutions and do not constitute a limitation on the present disclosure. In the drawings,

FIG. 1 shows an exemplary system architecture applicable to embodiments of the present disclosure;
FIG. 2 is a flowchart of an online ride-hailing information processing method according to an embodiment of the present disclosure;
FIG. 3 is a flowchart of a method for estimating a pickup duration according to an embodiment of the present disclosure;
FIG. 4 is a flowchart of a method for estimating an order-receiving duration according to an embodiment of the present disclosure;
FIG. 5 is a schematic diagram of a pickup duration estimation model according to an embodiment of the present disclosure;
FIG. 6 is a schematic diagram of an order-receiving duration estimation model according to an embodiment of the present disclosure;
FIG. 7 is a schematic diagram of multi-task training according to an embodiment of the present disclosure;
FIG. 8 is a flowchart of another online ride-hailing information processing method according to an embodiment of the present disclosure;
FIG. 9 is an instance diagram of a query result display interface according to an embodiment of the present disclosure;
FIG. 10 is a structural diagram of an online ride-hailing information processing apparatus according to an embodiment of the present disclosure;
FIG. 11 is a schematic structural diagram of another online ride-hailing information processing apparatus according to an embodiment of the present disclosure; and
FIG. 12 is a block diagram of an electronic device configured to implement embodiments of the present disclosure.

**DETAILED DESCRIPTION**

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

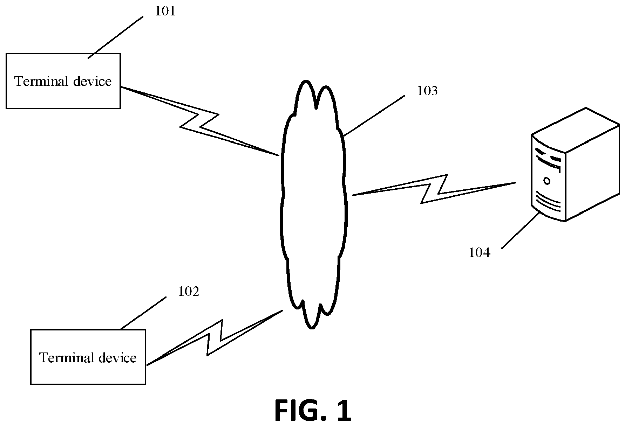

FIG. 1 shows an exemplary system architecture applicable to embodiments of the present disclosure.
As shown in FIG. 1, the system architecture may include terminal devices 101 and 102, a network 103, and a server 104. The network 103 is a medium configured to provide communication links between the terminal devices 101 and 102 and the server 104. The network 103 may include a variety of connection types, such as wired, wireless communication links, or fiber-optic cables.

A user may interact with the server 104 through the network 103 with the terminal devices 101 and 102. The terminal devices 101 and 102 may be provided with clients of online ride-hailing applications or clients that can display online ride-hailing information, especially clients used by passengers in the present application. Other terminal devices may also be provided with clients used by drivers.

The terminal devices 101 and 102 may be a variety of mobile electronic devices, including, but not limited to, smart phones, tablets, laptops, wearable devices, vehicle-mounted terminals, and so on. One online ride-hailing information processing apparatus according to the present application may be arranged and run in the server 104. Another online ride-hailing information processing apparatus according to the present application may be arranged and run in the terminal devices 101 and 102. The apparatus may be implemented as a plurality of software or software modules (for example, to provide distributed services) or as a single software or software module, which is not specifically limited herein.

The server 104 may be a single server or a server group composed of a plurality of servers. It is to be understood that numbers of the terminal device, the network, and the server in FIG. 1 are only illustrative. Any number of terminal devices, networks, and servers may be available according to implementation requirements.

In existing online ride-hailing services, a user can only select whether to perform ride hailing now after querying for cost information from an origin to a destination, such as a price or a route duration. If the cost is high due to factors such as road conditions, the user may give up ride hailing. However, the road conditions may improve in a short time, and the user may lose an opportunity to improve ride-hailing experience later, which also inhibits the development of the online ride-hailing industry. In some cases, in some ride-hailing peak periods, many users choose to set out now not because of a requirement of a trip, but because of worry about the shortage of transport capacity, so they are anxious to queue up. This will make it more expensive and harder to successfully perform ride hailing in the peak periods. In view of this, the present disclosure provides a new idea, which can recommend an order-sending time for a user, so that the user wanting a reduced cost or not rushing to set out now can choose to send an order later according to the recommended order-sending time. The present disclosure is described in detail below with reference to embodiments.

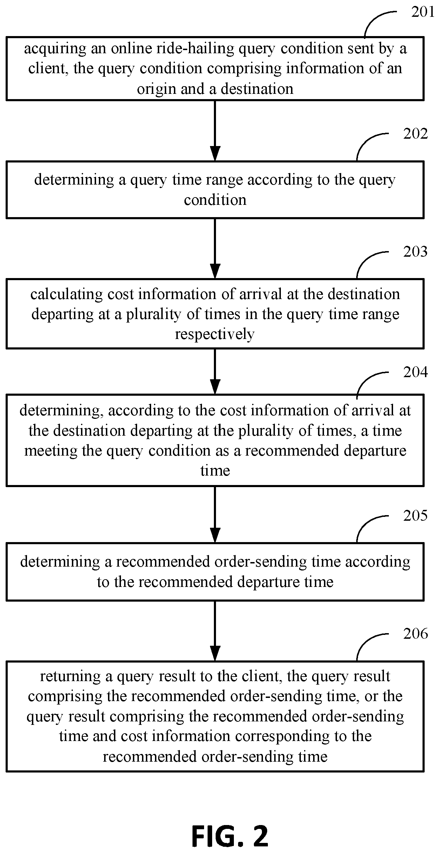

FIG. 2 is a flowchart of an online ride-hailing information processing method according to an embodiment of the present disclosure. The method may be performed on a server. As shown in FIG. 2, the method includes the following steps.

In 201, an online ride-hailing query condition sent by a client is acquired, the query condition including information of an origin and a destination.

In 202, a query time range is determined according to the query condition.

In 203, cost information of arrival at the destination departing at a plurality of times in the query time range is calculated respectively.

In 204, a time meeting the query condition is determined as a recommended departure time according to the cost information of arrival at the destination departing at the plurality of times.

In 205, a recommended order-sending time is determined according to the recommended departure time.

In 206, a query result is returned to the client, the query result including the recommended order-sending time, or the query result including the recommended order-sending time and cost information corresponding to the recommended order-sending time.

As can be seen from the above technical solution, according to the present disclosure, a recommended order-sending time can be determined in a query time range based on cost information departing at a plurality of times in the query time range, and the recommended order-sending time is returned in a query result or cost information corresponding to the recommended order-sending time is further returned. So, a user can select a low-cost order-sending time according to the recommended order-sending time or in further combination with the cost information. Firstly, the loss of ride-hailing experience due to the high cost of departure at the current time is prevented. Secondly, frequent attempts to query for cost information of ride hailing by the user in a short time are also prevented, and user efficiency and experience are improved. Thirdly, the user's ride-hailing cost is also reduced, and the cost is saved for the user. Fourthly, the problem of unreasonable distribution of transport capacity caused by the concentration of users in ride-hailing peak periods can also be alleviated. Fifthly, the user can acquire a low-cost order-sending time at one time without multiple attempts, saving network resources and reducing the influence on system pressure. Many things can be achieved at one stroke.

The steps in the above embodiment are described in detail below. Firstly, step 201 "acquiring an online ride-hailing query condition sent by a client, the query condition including information of an origin and a destination" is described in detail with reference to embodiments.

The online ride-hailing query condition is from the client, including at least information of an origin and a destination. The information of the origin may be information entered by a user or obtained according to a current location of the client. The information of the destination is generally information entered by the user. The "user" referred to in this embodiment refers to a passenger intended to use online ride hailing.

Furthermore, the query condition in the present disclosure may further include query time range information or further include a cost range.

A query time range is generally a future period of time set by the user, for example, in one hour in the future, in half an hour in the future, in two hours in the future, and so on, which is set according to the user's order-sending requirement. This reflects an acceptable period of time in which the user performs ride hailing. If the user is not anxious about the trip, a longer time range may be set. If the user is anxious about the trip, a shorter time range may be set.

The cost range may be an acceptable ride-hailing cost set by the user. It may be expressed as a price range, such as within 60 RMB. It may also be expressed as a route duration, that is, a time range, for example, within 40 minutes, and so on.

Specific functions of the query time range information and the cost range may be reflected in the following steps.

Step 202 "determining a query time range according to the query condition" is described in detail below with reference to embodiments.

If the query condition includes a query time range set by the user, in this step, the query time range set by the user is directly adopted. That is, the query time range is determined from the query condition.

If the query condition includes no user-set query time range, in this step, a default query time range may be adopted. For example, one hour in the future is set as the query time range by default.

Step 203 "calculating cost information of arrival at the destination departing at a plurality of times in the query time range respectively" is described in detail below with reference to embodiments.

In the present disclosure, a plurality of times may be selected in the query time range according to preset granularity. The granularity may be a set fixed value, or granularity corresponding to a length of the query time range. For example, if the query time range set by the user is half an hour, the granularity is 1 minute. If the query time range set by the user is 24 hours, the granularity is 10 minute.

As one implementation, the following processing may be performed for each of the plurality of times in the query time range, so as to obtain cost information of arrival at the destination departing at each time.

For time $t_i$, a route is planned from the origin to the destination based on a road condition estimation result at the time $t_i$, estimated duration information of arrival at the destination departing at the time $t_i$ is obtained as the cost information of arrival at the destination departing at the time $t_i$.

That is, firstly, a route from the origin to the destination is planned, road conditions at the time $t_i$ may be predicted in conjunction with a road condition prediction method during the route planning, the route is planned based on a road condition prediction result, and an estimated duration of arrival at the destination departing at the time $t_i$ is obtained. The route planning and the road condition prediction method may be performed in any practicable manner, which is not limited in the present disclosure.

As another implementation, the following processing may be performed for each of the plurality of times in the query time range, so as to obtain cost information of arrival at the destination departing at each time.

For time $t_i$, a route is planned from the origin to the destination based on a road condition estimation result at the time $t_i$ to obtain a route length and an estimated duration of arrival at the destination departing at the time $t_i$, a price is calculated using an online ride-hailing pricing rule, and the price calculated is taken as the cost information of arrival at the destination departing at this time.

The online ride-hailing pricing rule is generally relatively fixed, taking into account the interests of drivers, passengers and enterprises. Different regions or online ride-hailing platforms may have some differences, and specific pricing rules may be pre-acquired from the online ride-hailing platforms and recorded.

The online ride-hailing pricing rule is mostly composed of three aspects: a starting price, mileage and a duration. Generally, the starting price includes specific mileage and a duration, such as 3 km and 10 minutes. When the driving mileage exceeds 3 km, accumulation is performed at a fixed rate per kilometer. When the driving duration exceeds 10 minutes, accumulation is performed at a fixed rate per minute. A final sum is the calculated price. A driving duration is related to a road condition, and the road condition varies at different times, so the price for the same starting point and destination may vary at different times. The specific content of the online ride-hailing pricing rule is not limited in the present application, which is only illustrated herein for ease of understanding.

Step 204 "determining, according to the cost information of arrival at the destination departing at the plurality of times, a time meeting the query condition as a recommended departure time" is described in detail below with reference to embodiments.

In this step, if the query condition includes a query time range set by the user, N times corresponding to minimum costs in the query time range may be used as recommended departure times.

In the above step, the cost information corresponding to each time in the query time range are determined, so the time(s) with relatively low cost(s) may be preferably used as the recommended departure time(s). N may be a preset positive integer.

If the query condition includes a price range set by the user, a time corresponding to a cost in line with the cost range set by the user in the query time range may be used as the recommended departure time. For example, if the user sets a price range within 40 RMB, a time/times corresponding to a price/prices below 40 RMB may be selected from the plurality of times.

It is to be noted that one or more recommended departure times may be determined in this step.

The steps in the above embodiment are described in detail below. Firstly, step 205 "determining a recommended order-sending time according to the recommended departure time" is described in detail below with reference to embodiments.

The recommended departure time refers to an actual departure time recommended to the user, that is, a departure time from a starting point of a route. However, for the user, an order-sending time is more intuitive and desirable. Therefore, there is a need to determine the recommended order-sending time.

As one implementation, a specific implementation process of this step may include the following steps.

In step S1, an online ride-hailing pickup duration is estimated according to the recommended departure time, to obtain an estimated order-receiving time.

In step S2, an order-receiving time is estimated according to the estimated order-receiving time, to obtain the recommended order-sending time.

Between a user's sending an order and departure from a starting point of a route, there is a process of an online ride-hailing driver's receiving the order and picking up the user. The so-called "an online ride-hailing driver's receiving the order" refers to a process in which an online ride-hailing platform delivers a user's order to a matched online ride-hailing driver after the user sends the order, and the online ride-hailing driver takes the order. The so-called "picking up the user" refers to a process in which the online ride-hailing driver arrives at the passenger's location from the location of the driver after taking the order.

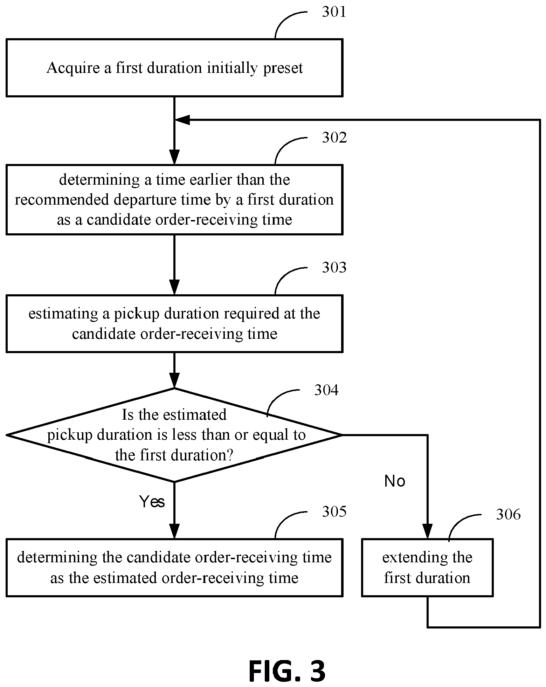

In step S1, the estimated order-receiving time is obtained by reversely deducing a required pickup time according to the recommended departure time. As shown in FIG. 3, a specific process includes the following steps.

In step 301, a first duration which is preset initially is acquired.

The first duration initially preset may be a preset time unit, for example, 1 minute.

In step 302, a time earlier than the recommended departure time by the first duration is determined as a candidate order-receiving time.

Assuming that the recommended departure time is expressed as $T_d$ and the time earlier than the recommended departure time by the first duration is expressed as $T_{d-n}$, then the candidate order-receiving time is $T_{d-n}$.

In step 303, a pickup duration required at the candidate order-receiving time is estimated. In this step, when the pickup duration (expressed as $T_{pickup}$) required by the candidate order-receiving time $T_{d-n}$ is estimated, a pickup duration estimation model may be used.

Specific implementation will be described in detail in the following.

In step 304, it is judged whether the estimated pickup duration is less than or equal to the first duration. If yes, step 305 is performed. Otherwise, step 306 is performed.

It is judged whether $T_{pickup}$ is less than or equal to the first duration. That is, it is judged whether $T_{d-n} + T_{pickup} \leq T_d$.

In step 305, the candidate order-receiving time is determined as the estimated order-receiving time, and the current estimation process is ended.

In this case, the current $T_{d-n}$ is the estimated order-receiving time $T_t$.

In step 306, the first duration is extended, and return to step 302.

In this case, the first duration may be extended, for example, by 1 minute, the first duration becomes 2 minutes, and step 302 is performed. In this case, $T_{d-n}$ is the time earlier than $T_d$ by 2 minutes. By analogy, the above steps are performed until the estimated order-receiving time is determined.

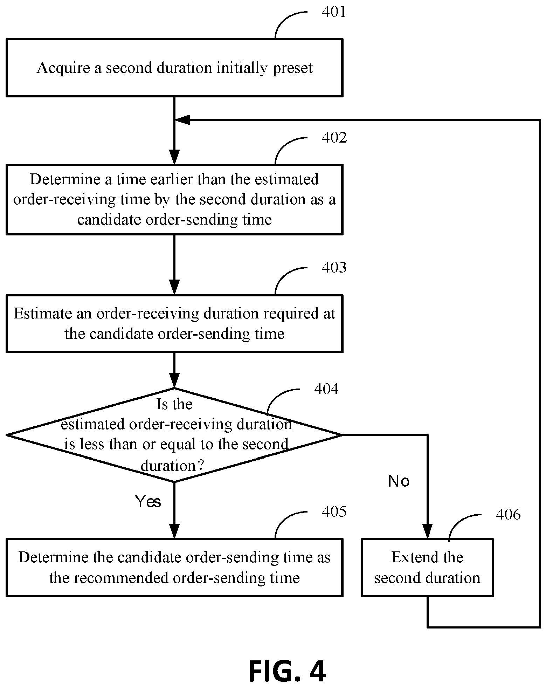

In step S2, the order-receiving time is reversely deduced according to the estimated order-receiving time, so as to obtain the recommended order-sending time. A specific process includes the following steps as shown in FIG. 4.

In step 401, a second duration which is initially preset is acquired.

Similar to the first duration, the second duration initially preset may be a preset time unit, for example, 1 minute.

In step 402, a time earlier than the estimated order-receiving time by the second duration is determined as a candidate order-sending time.

The estimated order-receiving time is $T_t$, and the time earlier than the estimated order-receiving time by the second duration is expressed as $T_{t-m}$; in this case, the candidate order-sending time is $T_{t-m}$.

In step 403, an order-receiving duration required at the candidate order-sending time is estimated.

In this step, when the order-receiving duration (expressed as $T_{order}$) required by the candidate order-sending time $T_{t-m}$ is estimated, an order-receiving duration estimation model may be used. Specific implementation will be described in detail in the following.

In step 404, it is judged whether the estimated order-receiving duration is less than or equal to the second duration. If yes, step 405 is performed. Otherwise, step 406 is performed.

It is judged whether $T_{order}$ is less than or equal to the second duration. That is, it is judged whether $T_{t-m} + T_{order} \leq T_t$.

In step 405, the candidate order-sending time is determined as the recommended order-sending time, and the current estimation process is ended.

In this case, the current $T_{t-m}$ is the recommended order-sending time $T_c$.

In step 406, the second duration is extended, and return to step 402 .

In this case, the second duration may be extended, for example, by 1 minute, the second duration becomes 2 minutes, and step 402 is performed. In this case, $T_{t-m}$ is the time earlier than $T_t$ by 2 minutes. By analogy, the above steps are performed until the recommended order-sending time is determined.

The pickup duration estimation model and the order-receiving duration estimation model are described in detail below with reference to embodiments.

The pickup duration estimation model may be a regression model. When the candidate order-receiving time $T_{d-n}$ is inputted into the model, the model can output a corresponding pickup duration $T_{pickup}$.

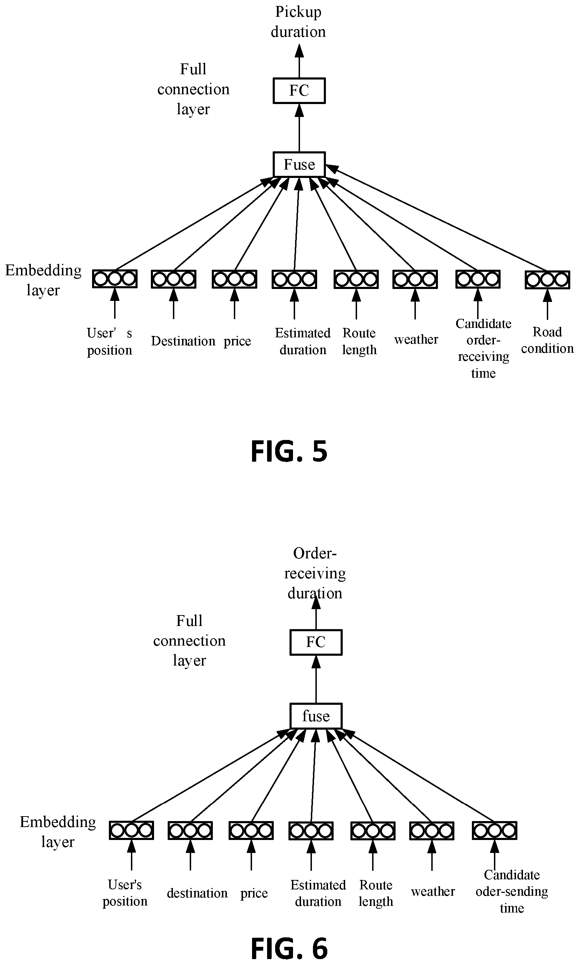

As a preferred implementation, the pickup duration estimation model may have a structure as shown in FIG. 5, mainly including an embedding layer and a full connection layer. The embedding layer is mainly configured to embed features inputted to the pickup duration estimation model to obtain vector representations of the features respectively. The vector representations of the features are inputted to the full connection layer after fusion such as splicing, and are mapped by the full connection layer to obtain the pickup duration.

In addition to the candidate order-receiving time $T_{d-n}$, the features inputted to the pickup duration estimation model further include at least one of a user's position, a destination, cost information of the recommended departure time, a route length, weather information, and road condition information. For example, all such information is included in FIG. 5. For example, the cost information includes a price and an estimated duration.

The order-receiving duration estimation model may also be a regression model. When the candidate order-sending time $T_{t-m}$ is inputted into the model, the model can output a corresponding order-receiving duration $T_{order}$.

As a preferred implementation, the order-receiving duration estimation model may have a structure as shown in FIG. 6, mainly including an embedding layer and a full connection layer. The embedding layer is mainly configured to embed features inputted to the order-receiving duration estimation model to obtain vector representations of the features respectively. The vector representations of the features are inputted to the full connection layer after fusion such as splicing, and are mapped by the full connection layer to obtain the order-receiving duration.

In addition to the candidate order-sending time $T_{t-m}$, the features inputted to the order-receiving duration estimation model further include at least one of a user's position, a destination, cost information of the recommended departure time, a route length, or weather information. For example, all such information is included in FIG. 6. For example, the cost information includes a price and an estimated duration.

In the pickup duration estimation model and the order-receiving duration estimation model, when the user's position and destination are embedded, the features used may be POI information. The POI information may include a POI name, attributes, coordinate information, and the like. The embedding is actually a semantic representation of the POI information. The POI name may have characteristics of POI heat and functions, so the POI name may be word-segmented and then vectorized. The POI attribute information mainly adopts categories, such as public transit hubs and residential areas, etc., which may be represented by discrete numerical values. The attribute information describes spatial heat information, so the whole region may be divided into grids and then serialized and numbered, and the numbers of the grids where coordinates are located may be represented as features.

Time features such as the recommended departure time and the candidate order-sending time may be represented by continuous values. For example, a specific time may include an hour value x, a minute value 12, and a second value z, which may be represented by defining two features $\sin\left(\frac{2\pi(3600x+60y+z)}{86400}\right)$ and $\cos\left(\frac{2\pi(3600x+60y+z)}{86400}\right)$. Such a representation may limit a value range to [-1,1].

The time features may also be represented by discrete information such as whether it is a working day or a day of the week.

The price, the estimated duration and the route length are all discrete values, which may be directly inputted into the model after normalization.

Weather features may be represented discretely by onehot to express and distinguish weather such as sunny, cloudy, fog, rain (light rain, moderate rain, heavy rain, rainstorm), and snow (light rain, moderate rain, heavy rain, rainstorm).

Road condition features are introduced into the pickup duration estimation model, because they have a high impact on the pickup duration, and nearby road condition features are not adequately expressed in other features. Road condition features near the user are intended mainly to describe the density of traffic flow within a certain physical range. Therefore, neural networks such as Convolutional Neural Networks (CNNs) and Graph Convolutional Neural Networks (GCNs) may be adopted for encoding. For example, a preset range may be extended outward with the user's location as a central area, for example, by 2 km, to obtain a square area of 4 km*4 km, and then this area is divided into 16 small areas of 1 km* 1 km. A traffic flow feature in the area may be represented by an average value of a road congestion coefficient weighted a road length, for example,

$$I_x = \frac{\sum_i j_i * l_i}{\sum_i l_i}$$

where $I_x$ denotes the traffic flow feature in the area, $l_i$

denotes a road length in an $i^{th}$ small area, and $j_i$ denotes a congestion coefficient of the $i^{th}$ small area.

When the pickup duration estimation model is pre-trained, training data used may be acquired from a log of the online ride-hailing platform. A duration from a driver's receiving an order to a passenger's getting on, that is, a pickup duration, is recorded on the online ride-hailing platform. The regression model is trained by extracting the passenger's position, destination, price, route length, weather information, road condition information and the driver's order-receiving time from such data as input and using an actual pickup duration as target output, to obtain the pickup duration estimation model. That is, when a loss is designed, an absolute value of a difference between the output of the pickup duration estimation model and the actual pickup duration is minimized.

When the order-receiving duration estimation model is pre-trained, the training data used may also be acquired from a log of the online ride-hailing platform. A duration from a passenger's sending an order to a driver's receiving the order, that is, an order-receiving duration, is recorded on the online ride-hailing platform. The regression model is trained by extracting the passenger's position, destination, price, route length, weather information and the passenger's order-sending time from such data as input and using an actual order-receiving duration as target output, to obtain the order-receiving duration estimation model. That is, when the loss is designed, an absolute value of a difference between the output of the order-receiving duration estimation model and the actual order-receiving duration is minimized.

The pickup duration estimation model and the order-receiving duration estimation model may be trained respectively or trained by multi-task learning.

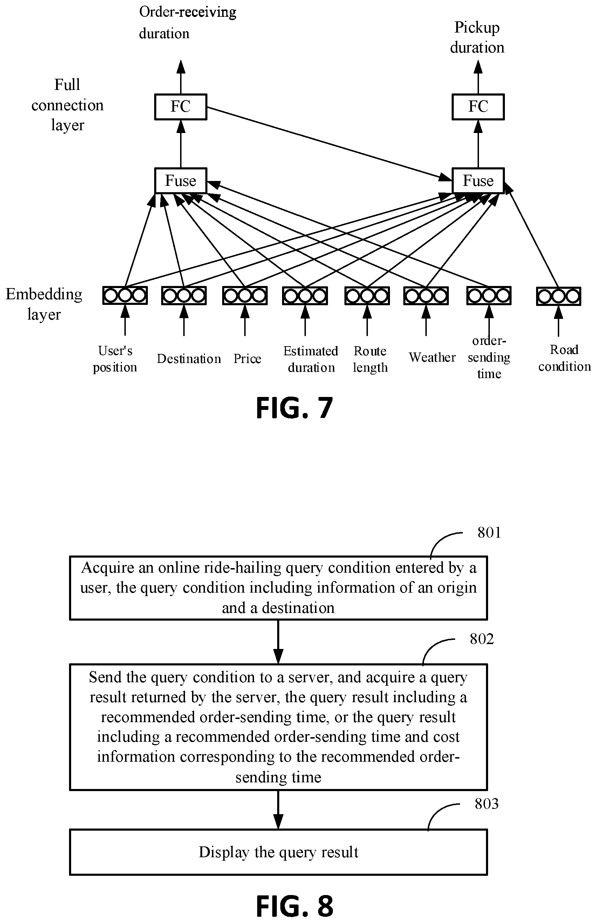

In the case of the training by multi-task learning, as shown in FIG. 7, the user's position, destination, estimated price, route length, and weather information are used as shared features, and an embedding portion corresponding thereto is a sharing layer. The road condition features are features unique to the pickup duration estimation model. The order-sending time is input to the order-receiving duration estimation model. After an order-receiving model outputs an order-receiving duration, the order-receiving duration is combined with the order-sending time to obtain the order-receiving time, which is used as input to the pickup duration estimation model. In the case of multi-task training, a task may be randomly selected in each iteration, and after a loss of the task is calculated, and model parameters corresponding to the task are updated by gradient descent. Alternatively, joint training may also be adopted, that is, only a loss of a pickup task is adopted, and all the model parameters are updated by gradient descent. The iteration is continued until a preset training end condition is met, for example, a loss converges, a number of iterations reaches a preset iteration number threshold, and so on.

FIG. 8 is a flowchart of another online ride-hailing information processing method according to an embodiment of the present disclosure. The method may be performed on a client. As shown in FIG. 8, the method includes the following steps.

In 801, an online ride-hailing query condition entered by a user is acquired, the query condition including information of an origin and a destination.

In the embodiment of the present disclosure, the client may be a client of an online ride-hailing application or a client integrating other applications of online ride-hailing functions, for example, a client integrating map applications of online ride-hailing functions.

The client may provide a first interface for the user to allow the user to enter information of an origin and a destination for ride hailing.

Furthermore, a component to set a query time range or cost range may also be provided for the user. For example, an input box may be provided on the first interface to allow the user to enter a query time range or cost range. In another example, an option such as a drop-down box may be provided on the first interface to allow the user to choose to enter a query time range or cost range. The cost range may be a price range or a duration range of a route (i.e., a ride-hailing trip).

In 802, the query condition is sent to a server, and a query result returned by the server is acquired, the query result including a recommended order-sending time, or the query result including a recommended order-sending time and cost information corresponding to the recommended order-sending time.

After the client sends the query condition to the server, the server performs the process in the embodiment shown in FIG. 2, generates a query result, and returns the query result to the client. The processing performed by the server is not repeated herein.

The cost information corresponding to the recommended order-sending time may include estimated duration information of arrival at the destination departing at the recommended order-sending time, or price information of arrival at the destination departing at the recommended order-sending time.

In 803, the query result is displayed.

The client may provide a second interface for the user, and display the query result on the second interface. At least a recommended order-sending time is displayed on the second interface. One or more recommended order-sending times may be provided. When the recommended order-sending time is displayed, only the recommended order-sending time or various times in the query time range may be displayed, but the recommended order-sending time is highlighted.

Cost information corresponding to the recommended order-sending time may be displayed while the recommended order-sending time is displayed. Only one type of cost information or more types of cost information may be provided for the user to select.

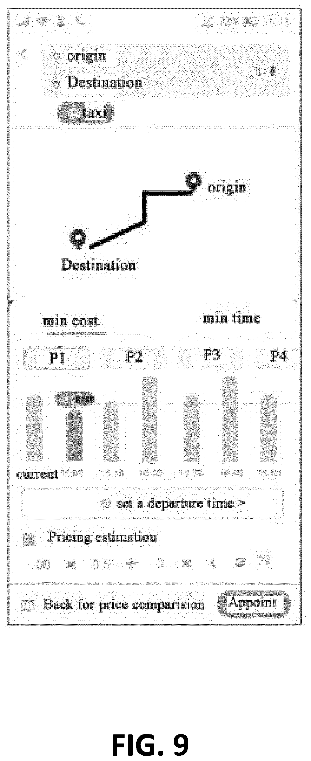

FIG. 9 is an instance diagram of a query result display interface according to an embodiment of the present disclosure. As shown in FIG. 9, two types of cost information may be provided for the user to select: minimum cost (i.e., price) and minimum time (i.e., estimated duration of the route). When the user selects minimum cost, a recommended order-sending time with the minimum cost is displayed to the user. A plurality of online ride-hailing platforms may also be provided for the user to select and view. In FIG. 9, taking a query time range within one hour as an example, the recommended order-sending time is highlighted, that is, the time of 16:00, and a cost of 27 RMB corresponding thereto is displayed.

Furthermore, a component to set a departure time may be displayed on the second interface, for example, the component to "set a departure time" shown in FIG. 9. A departure time set by the user is recorded after an event that the component is triggered is acquired. A reminder message is displayed to the user when the departure time set by the user arrives or at a time earlier than the departure time set by the user by a preset duration.

Furthermore, a component to appoint order sending may be displayed on the second interface, for example, the component to "appoint ride hailing" shown in FIG. 9. A order-sending time set by the user is recorded after an event that the component is triggered is acquired. An online ride-hailing order from the origin to the destination is sent through the server interaction unit when the order-sending time set by the user arrives.

The above is a detailed description about the method according to the present disclosure. The following is a detailed description about the apparatus according to the present disclosure with reference to embodiments.

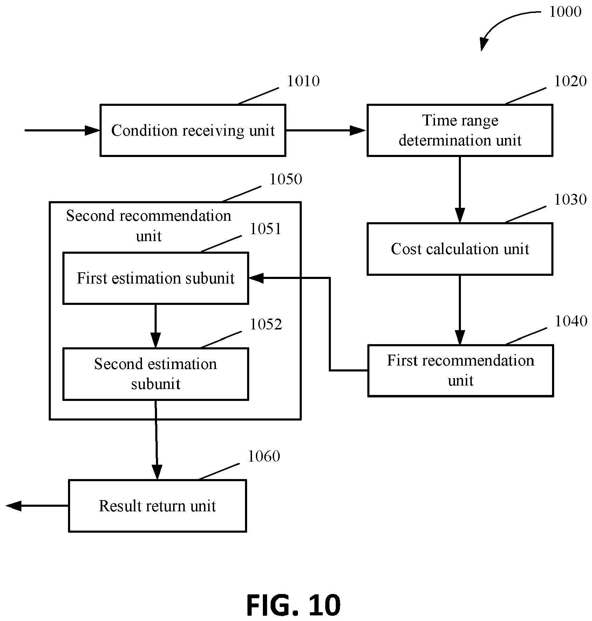

FIG. 10 is a structural diagram of an online ride-hailing information processing apparatus according to an embodiment of the present disclosure, which is arranged on a server. The apparatus may be an application located in a server, or a functional unit in an application located in a server such as a plug-in or a Software Development Kit (SDK). As shown in FIG. 10, the apparatus 1000 may include: a condition receiving unit 1010, a time range determination unit 1020, a cost calculation unit 1030, a first recommendation unit 1040, a second recommendation unit 1050, and a result return unit 1060. Main functions of the component units are as follows.

The condition receiving unit 1010 is configured to acquire an online ride-hailing query condition sent by a client, the query condition including information of an origin and a destination.

The time range determination unit 1020 is configured to determine a query time range according to the query condition.

The cost calculation unit 1030 is configured to calculate cost information of arrival at the destination departing at a plurality of times in the query time range respectively.

The first recommendation unit 1040 is configured to determine, according to the cost information of arrival at the destination departing at the plurality of times, a time meeting the query condition as a recommended departure time.

The second recommendation unit 1050 is configured to determine a recommended order-sending time according to the recommended departure time.

The result return unit 1060 is configured to return a query result to the client, the query result including the recommended order-sending time, or the query result including the recommended order-sending time and cost information corresponding to the recommended order-sending time.

As one implementation, the query condition further includes a query time range, and the first recommendation unit 1040 is specifically configured to use N times corresponding to minimum costs in the query time range as recommended departure times, N being a preset positive integer.

As another implementation, the query condition further includes a cost range, and the first recommendation unit 1040 is specifically configured to use a time corresponding to a cost in line with the cost range set by a user in the query time range as the recommended departure time.

The time range determination unit 1020 is specifically configured to adopt the query time range set by a user if the query condition includes the query time range set by the user; otherwise, adopt a default query time range.

The cost calculation unit 1030 is specifically configured to perform the following operations for each time of the plurality of times:

planning a route from the origin to the destination based on a road condition estimation result at this time, and obtaining estimated duration information of arrival at the destination departing at this time as the cost information of arrival at the destination departing at this time; or

planning a route from the origin to the destination based on a road condition estimation result at this time, and obtaining a route length and an estimated duration of arrival at the destination departing at this time, calculating a price using an online ride-hailing pricing rule, and taking the price calculated as the cost information of arrival at the destination departing at this time.

Specifically, the second recommendation unit 1050 may include: a first estimation subunit 1051 and a second estimation subunit 1052.

The first estimation subunit 1051 is configured to estimate an online ride-hailing pickup duration according to the recommended departure time, to obtain an estimated order-receiving time.

The second estimation subunit 1052 is configured to estimate an order-receiving time according to the estimated order-receiving time, to obtain the recommended order-sending time.

The first estimation subunit 1051 is specifically configured to:

determine a time earlier than the recommended departure time by a first duration, which is initially preset, as a candidate order-receiving time;
estimate a pickup duration required at the candidate order-receiving time; and
determine the candidate order-receiving time as the estimated order-receiving time if the estimated pickup duration is less than or equal to the first duration; otherwise, extend the first duration, and return to determining a time earlier than the recommended departure time by the first duration, which has been extended, as a candidate order-receiving time.

As a preferred implementation, when estimating the pickup duration required at the candidate order-receiving time, the first estimation subunit 1051 is specifically configured to input the candidate order-receiving time and at least one of a user's position, a destination, the cost information, a route length, weather information, or road condition information to a pickup duration estimation model to obtain the pickup duration required at the candidate order-receiving time.

The second estimation subunit 1052 is specifically configured to:

determine a time earlier than the estimated order-receiving time by a second duration, which is initially preset, as a candidate order-sending time;
estimate an order-receiving duration required at the candidate order-sending time; and
determine the candidate order-sending time as the recommended order-sending time if the estimated order-receiving duration is less than or equal to the second duration; otherwise, extend the second duration, and return to determine a time earlier than the estimated order-receiving time by the second duration, which has been extended, as the candidate order-sending time.

As a preferred implementation, when estimating the order-receiving duration required at the candidate order-sending time, the second estimation subunit 1052 is specifically configured to input the candidate order-sending time and at least one of a user's position, a destination, the cost information, a route length, or weather information to an order-receiving duration estimation model to obtain the order-receiving duration required at the candidate order-sending time.

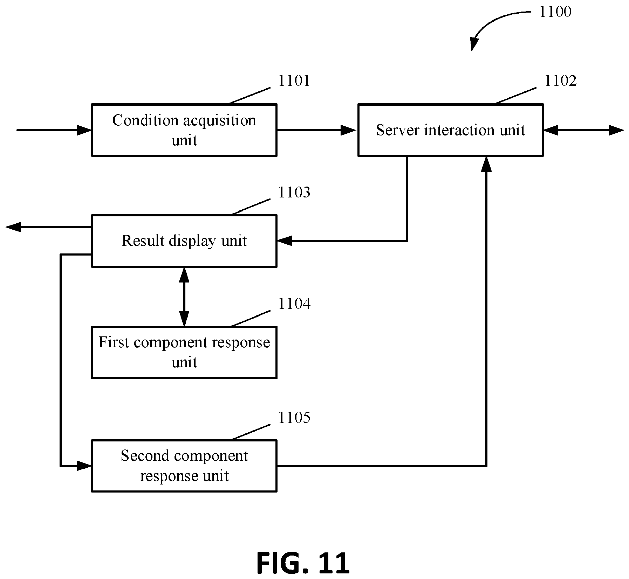

FIG. 11 is a schematic structural diagram of another online ride-hailing information processing apparatus according to an embodiment of the present disclosure, which is arranged on a terminal device. The apparatus may be an application located in a terminal device, or a functional unit in an application located in a terminal device such as a plug-in or an SDK. As shown in FIG. 11, the apparatus may include: a condition acquisition unit 1101, a server interaction unit 1102, and a result display unit 1103, and may further include a first component response unit 1104 and a second component response unit 1105. Main functions of the component units are as follows.

The condition acquisition unit 1101 is configured to acquire an online ride-hailing query condition entered by a user, the query condition including information of an origin and a destination.

The server interaction unit 1102 is configured to send the query condition to a server, and acquire a query result returned by the server, the query result including a recommended order-sending time, or the query result including a recommended order-sending time and cost information corresponding to the recommended order-sending time.

The result display unit 1103 is configured to display the query result.

The cost information corresponding to the recommended order-sending time may include estimated duration information of arrival at the destination departing at this time, or price information of arrival at the destination departing at this time.

Furthermore, the result display unit 1103 may also be configured to display a component to set a departure time on an interface.

The first component response unit 1104 is configured to record the departure time set by the user after an event that the component is triggered is acquired; and display a reminder message to the user through the result display unit 1103 when the departure time set by the user arrives or at a time earlier than the departure time set by the user by a preset duration.

Furthermore, the result display unit 1103 is further configured to display a component to appoint order sending on the interface.

The second component response unit 1105 is configured to record a order-sending time set by the user after an event that the component is triggered is acquired; and send an online ride-hailing order from the origin to the destination through the server interaction unit 1102 when the order-sending time set by the user arrives.

Various embodiments in the specification are described progressively. Same and similar parts among the embodiments may be referred to one another, and each embodiment focuses on differences from other embodiments. In particular, the apparatus embodiments are basically similar to the method embodiments, so the description thereof is relatively simple. Related parts may be obtained with reference to the corresponding description in the method embodiments.

According to embodiments of the present disclosure, the present disclosure further provides an electronic device, a readable storage medium and a computer program product.

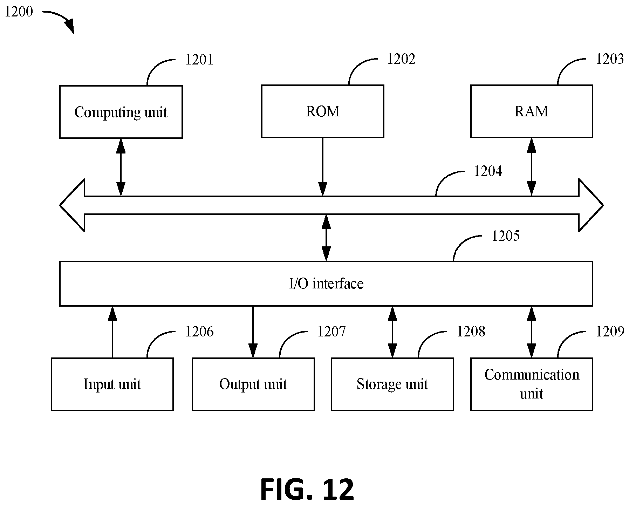

FIG. 12 is a block diagram of an electronic device configured to perform an online ride-hailing information processing method according to an embodiment of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 12, the device 1200 includes a computing unit 1201, which may perform various suitable actions and processing according to a computer program stored in a read-only memory (ROM) 1202 or a computer program loaded from a storage unit 1208 into a random access memory (RAM) 1203. The RAM 1203 may also store various programs and data required to operate the device 1200. The computing unit 1201, the ROM 1202 and the RAM 1203 are connected to one another by a bus 1204. An input/output (I/O) interface 1205 may also be connected to the bus 1204.

A plurality of components in the device 1200 are connected to the I/O interface 1205, including an input unit 1206, such as a keyboard and a mouse; an output unit 1207, such as various displays and speakers; a storage unit 1208, such as disks and discs; and a communication unit 1209, such as a network card, a modem and a wireless communication transceiver. The communication unit 1209 allows the device 1200 to exchange information/data with other devices over computer networks such as the Internet and/or various telecommunications networks.

The computing unit 1201 may be a variety of general-purpose and/or special-purpose processing components with processing and computing capabilities. Some examples of the computing unit 1201 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 1201 performs the methods and processing described above, such as the online ride-hailing information processing method. For example, in some embodiments, the online ride-hailing information processing method may be implemented as a computer software program that is tangibly embodied in a machine-readable medium, such as the storage unit 1208.

In some embodiments, part or all of a computer program may be loaded and/or installed on the device 1200 via the ROM 802 and/or the communication unit 1209. One or more steps of the online ride-hailing information processing method described above may be performed when the computer program is loaded into the RAM 1203 and executed by the computing unit 1201. Alternatively, in other embodiments, the computing unit 1201 may be configured to perform the online ride-hailing information processing method by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input device, and at least one output device, and to transmit data and instructions to the storage system, the at least one input device, and the at least one output device.

Program codes configured to implement the methods in the present disclosure may be written in any combination of one or more programming languages. Such program codes may be supplied to a processor or controller of a general-purpose computer, a special-purpose computer, or another programmable data processing device to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display device (e.g., a cathode-ray tube (CRT) or a liquid crystal display (LCD) monitor) for displaying information to the user; and a keyboard and a pointing device (e.g., a mouse or trackball) through which the user may provide input for the computer. Other kinds of devices may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation schema of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, also known as a cloud computing server or cloud host, which is a host product in the cloud computing service system to solve the problems of difficult management and weak business scalability in the traditional physical host and a virtual private server (VPS). The server may also be a distributed system server, or a server combined with blockchain.

It should be understood that the steps can be reordered, added, or deleted using the various forms of processes shown above. For example, the steps described in the present application may be executed in parallel or sequentially or in different sequences, provided that desired results of the technical solutions disclosed in the present disclosure are achieved, which is not limited herein.

The above specific implementations do not limit the protection scope of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the protection scope of the present disclosure.

**Claims**

1. An online ride-hailing information processing method, comprising:

   acquiring an online ride-hailing query condition sent by a client, the query condition comprising information of an origin and a destination;
   determining a query time range according to the query condition;
   calculating cost information of arrival at the destination departing at a plurality of times in the query time range respectively;
   determining, according to the cost information of arrival at the destination departing at the plurality of times, a time meeting the query condition as a recommended departure time;
   determining a recommended order-sending time according to the recommended departure time; and
   returning a query result to the client, the query result comprising the recommended order-sending time, or the query result comprising the recommended order-sending time and cost information corresponding to the recommended order-sending time.

2. The method according to claim 1, wherein the query condition further comprises the query time range; and
   wherein determining, according to the cost information of arrival at the destination departing at the plurality of times, the time meeting the query condition as the recommended departure time comprises:
   using N times corresponding to minimum costs in the query time range as recommended departure times, N being a preset positive integer.

3. The method according to claim 1, wherein the query condition further comprises a cost range set by a user; and
   wherein determining, according to the cost information of arrival at the destination departing at the plurality of times, the time meeting the query condition as the recommended departure time comprises:
   using a time corresponding to a cost in line with the cost range in the query time range as the recommended departure time.

4. The method according to claim 1, wherein determining the query time range according to the query condition comprises:
   adopting the query time range set by a user if the query condition comprises the query time range set by the user; otherwise, adopting a default query time range.

5. The method according to claim 1, wherein calculating cost information of arrival at the destination departing at the plurality of times in the query time range respectively comprises:
for each time of the plurality of times, planning a route from the origin to the destination based on a road condition estimation result at this time, and obtaining estimated duration information of arrival at the destination departing at this time as the cost information of arrival at the destination departing at this time; or planning a route from the origin to the destination based on a road condition estimation result at this time, and obtaining a route length and an estimated duration of arrival at the destination departing at this time, calculating a price using an online ride-hailing pricing rule, and taking the price calculated as the cost information of arrival at the destination departing at this time.

6. The method according to claim 1, wherein determining the recommended order-sending time according to the recommended departure time comprises:

estimating an online ride-hailing pickup duration according to the recommended departure time, to obtain an estimated order-receiving time; and estimating an order-receiving time according to the estimated order-receiving time, to obtain the recommended order-sending time.

7. The method according to claim 6, wherein estimating the online ride-hailing pickup duration according to the recommended departure time, to obtain the estimated order-receiving time comprises:

determining a time earlier than the recommended departure time by a first duration, which is initially preset, as a candidate order-receiving time;
estimating a pickup duration required at the candidate order-receiving time; and determining the candidate order-receiving time as the estimated order-receiving time if the estimated pickup duration is less than or equal to the first duration; otherwise, extending the first duration, and returning to determine a time earlier than the recommended departure time by the first duration, which has been extended, as a candidate order-receiving time.

8. The method according to claim 7, wherein estimating the pickup duration required at the candidate order-receiving time comprises:
inputting the candidate order-receiving time and at least one of a user's position, a destination, the cost information, a route length, weather information, or road condition information to a pickup duration estimation model to obtain the pickup duration required at the candidate order-receiving time.

9. The method according to claim 6, wherein estimating the order-receiving time according to the estimated order-receiving time to obtain the recommended order-sending time comprises:

determining a time earlier than the estimated order-receiving time by a second duration, which is initially preset, as a candidate order-sending time;
estimating an order-receiving duration required at the candidate order-sending time; and determining the candidate order-sending time as the recommended order-sending time if the estimated order-receiving duration is less than or equal to the second duration; otherwise, extending the second duration, and returning to determine a time earlier than the estimated order-receiving time by the second duration, which has been extended, as the candidate order-sending time.

10. The method according to claim 9, wherein estimating the order-receiving duration required at the candidate order-sending time comprises:
inputting the candidate order-sending time and at least one of a user's position, a destination, the cost information, a route length, or weather information to an order-receiving duration estimation model to obtain the order-receiving duration required at the candidate order-sending time.

11. An online ride-hailing information processing method, comprising:

acquiring an online ride-hailing query condition entered by a user, the query condition comprising information of an origin and a destination;
sending the query condition to a server, and acquiring a query result returned by the server, the query result comprising a recommended order-sending time, or the query result comprising a recommended order-sending time and cost information corresponding to the recommended order-sending time; and displaying the query result.

12. The method according to claim 11, wherein the cost information corresponding to the recommended order-sending time comprises:
estimated duration information of arrival at the destination departing at the recommended order-sending time, or price information of arrival at the destination departing at the recommended order-sending time.

**13.** The method according to claim 11, further comprising:

> displaying, on an interface, a component to set a departure time;
> recording the departure time set by the user after an event that the component is triggered is acquired; and
> displaying a reminder message to the user when the departure time set by the user arrives or at a time earlier than the departure time set by the user by a preset duration.

**14.** The method according to claim 11, further comprising:

> displaying, on an interface, a component to appoint order sending;
> recording a order-sending time set by the user after an event that the component is triggered is acquired; and
> sending an online ride-hailing order from the origin to the destination when the order-sending time set by the user arrives.

**15.** An online ride-hailing information processing apparatus, comprising:

> a condition receiving unit configured to acquire an online ride-hailing query condition sent by a client, the query condition comprising information of an origin and a destination;
> a time range determination unit configured to determine a query time range according to the query condition;
> a cost calculation unit configured to calculate cost information of arrival at the destination departing at a plurality of times in the query time range respectively;
> a first recommendation unit configured to determine, according to the cost information of arrival at the destination departing at the plurality of times, a time meeting the query condition as a recommended departure time;
> a second recommendation unit configured to determine a recommended order-sending time according to the recommended departure time; and
> a result return unit configured to return a query result to the client, the query result comprising the recommended order-sending time, or the query result comprising the recommended order-sending time and cost information corresponding to the recommended order-sending time.

**16.** The apparatus according to claim 15, wherein the query condition further comprises the query time range, and the first recommendation unit is specifically configured to use N times corresponding to minimum costs in the query time range as recommended departure times, N being a preset positive integer; or the query condition further comprises a cost range, and the first recommendation unit is specifically configured to use a time corresponding to a cost in line with the cost range set by a user in the query time range as the recommended departure time.

**17.** The apparatus according to claim 15, wherein the time range determination unit is specifically configured to adopt the query time range set by a user if the query condition comprises the query time range set by the user; otherwise, adopt a default query time range.

**18.** The apparatus according to claim 15, wherein the cost calculation unit is specifically configured to perform the following operations for each time of the plurality of times:

> planning a route from the origin to the destination based on a road condition estimation result at this time, and obtaining estimated duration information of arrival at the destination departing at this time as the cost information of arrival at the destination departing at this time; or
> planning a route from the origin to the destination based on a road condition estimation result at this time, and obtaining a route length and an estimated duration of arrival at the destination departing at this time, calculating a price using an online ride-hailing pricing rule, and taking the price calculated as the cost information of arrival at the destination departing at this time.

**19.** The apparatus according to claim 15, wherein the second recommendation unit comprises:

> a first estimation subunit configured to estimate an online ride-hailing pickup duration according to the recommended departure time, to obtain an estimated order-receiving time; and
> a second estimation subunit configured to estimate an order-receiving time according to the estimated order-receiving time, to obtain the recommended order-sending time.

**20.** The apparatus according to claim 19, wherein the first estimation subunit is specifically configured to:

> determine a time earlier than the recommended departure time by a first duration, which is initially preset, as a candidate order-receiving time;
> estimate a pickup duration required at the candidate order-receiving time; and

determine the candidate order-receiving time as the estimated order-receiving time if the estimated pickup duration is less than or equal to the first duration; otherwise, extend the first duration, and return to determine a time earlier than the recommended departure time by the first duration, which has been extended, as a candidate order-receiving time.

21. The apparatus according to claim 20, wherein, when estimating the pickup duration required at the candidate order-receiving time, the first estimation subunit is specifically configured to input the candidate order-receiving time and at least one of a user's position, a destination, the cost information, a route length, weather information, or road condition information to a pickup duration estimation model to obtain the pickup duration required at the candidate order-receiving time.

22. The apparatus according to claim 19, wherein the second estimation subunit is specifically configured to:

    determine a time earlier than the estimated order-receiving time by a second duration, which is initially preset, as a candidate order-sending time;
    estimate an order-receiving duration required at the candidate order-sending time; and
    determine the candidate order-sending time as the recommended order-sending time if the estimated order-receiving duration is less than or equal to the second duration; otherwise, extend the second duration, and return to determine a time earlier than the estimated order-receiving time by the second duration, which has been extended, as the candidate order-sending time.

23. The apparatus according to claim 22, wherein, when estimating the order-receiving duration required at the candidate order-sending time, the second estimation subunit is specifically configured to input the candidate order-sending time and at least one of a user's position, a destination, the cost information, a route length, or weather information to an order-receiving duration estimation model to obtain the order-receiving duration required at the candidate order-sending time.

24. An online ride-hailing information processing apparatus, comprising:

    a condition acquisition unit configured to acquire an online ride-hailing query condition entered by a user, the query condition comprising information of an origin and a destination;
    a server interaction unit configured to send the query condition to a server, and acquire a query result returned by the server, the query result comprising a recommended order-sending time, or the query result comprising a recommended order-sending time and cost information corresponding to the recommended order-sending time; and
    a result display unit configured to display the query result.

25. The apparatus according to claim 24, wherein the cost information corresponding to the recommended order-sending time comprises:
    estimated duration information of arrival at the destination departing at the recommended order-sending time, or price information of arrival at the destination departing at the recommended order-sending time.

26. The apparatus according to claim 24, wherein the result display unit is further configured to display, on an interface, a component to set a departure time; and
    the apparatus further comprises: a first component response unit configured to record the departure time set by the user after an event that the component is triggered is acquired; and display a reminder message to the user through the result display unit when the departure time set by the user arrives or at a time earlier than the departure time set by the user by a preset duration.

27. The apparatus according to claim 24, wherein the result display unit is further configured to display, on an interface, a component to appoint order sending; and
    a second component response unit configured to record a order-sending time set by the user after an event that the component is triggered is acquired; and send an online ride-hailing order from the origin to the destination through the server interaction unit when the order-sending time set by the user arrives.

28. An electronic device, comprising:

    at least one processor; and
    a memory in communication connection with the at least one processor; wherein
    the memory stores instructions executable by the at least one processor, and the instructions are executed by the at least one processor to enable the at least one processor to perform the method according to any one of claims 1 to 14.

29. A non-transitory computer-readable storage medium storing computer instructions, wherein the computer instructions are configured to cause a computer to perform the method according to any one of claims 1 to 14.

30. A computer program product, comprising a computer program, wherein, when the computer program is executed by a processor, the method according to any one of claims 1 to 14 is performed.

101

Terminal device

103

104

102

Terminal device

**FIG. 1**

201

acquiring an online ride-hailing query condition sent by a client, the query condition comprising information of an origin and a destination

202

determining a query time range according to the query condition

203

calculating cost information of arrival at the destination departing at a plurality of times in the query time range respectively

204

determining, according to the cost information of arrival at the destination departing at the plurality of times, a time meeting the query condition as a recommended departure time

205

determining a recommended order-sending time according to the recommended departure time

206

returning a query result to the client, the query result comprising the recommended order-sending time, or the query result comprising the recommended order-sending time and cost information corresponding to the recommended order-sending time

## FIG. 2

**301**
Acquire a first duration initially preset

**302**
determining a time earlier than the recommended departure time by a first duration as a candidate order-receiving time

**303**
estimating a pickup duration required at the candidate order-receiving time

**304**
Is the estimated pickup duration is less than or equal to the first duration?

Yes

No

**305**
determining the candidate order-receiving time as the estimated order-receiving time

**306**
extending the first duration

**FIG. 3**

FIG. 4

Pickup
duration

Full
connection
layer

FC

Fuse

Embedding
layer

User's
position
Destination
price
Estimated
duration
Route
length
weather
Candidate
order-
receiving
time
Road
condition

**FIG. 5**

Order-
receiving
duration

Full
connection
layer

FC

fuse

Embedding
layer

User's
position
destination
price
Estimated
duration
Route
length
weather
Candidate
oder-sending
time

**FIG. 6**

Order-receiving
duration

Pickup
duration

Full
connection
layer

FC

FC

Fuse

Fuse

Embedding
layer

| User's position | Destination | Price | Estimated duration | Route length | Weather | order-sending time | Road condition |

## FIG. 7

801

Acquire an online ride-hailing query condition entered by a user, the query condition including information of an origin and a destination

802

Send the query condition to a server, and acquire a query result returned by the server, the query result including a recommended order-sending time, or the query result including a recommended order-sending time and cost information corresponding to the recommended order-sending time

803

Display the query result

## FIG. 8

# FIG. 9

**FIG. 10**

FIG. 11

1200

1201

Computing unit

1202

ROM

1203

RAM

1204

1205

I/O interface

1206

Input unit

1207

Output unit

1208

Storage unit

1209

Communication unit

FIG. 12

## INTERNATIONAL SEARCH REPORT

| International application No. |
| --- |
| **PCT/CN2021/131178** |

**A. CLASSIFICATION OF SUBJECT MATTER**

G06Q 10/06(2012.01)i;  G06Q 10/02(2012.01)i;  G06Q 30/06(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNABS, CNTXT, CNKI, DWPI, VEN, USTXT, EPTXT, WOTXT, IEEE: 滴滴, 顺风车, 叫车, 打车, 网约车, 快车, 出行, 成本, 车费, 价格, 代价, 开销, 耗时, 时长, 费用, 推荐, 建议, 预测, 预估, 估计, 时刻, 时间, 时段, 方案, 下单, 发单, 变化, 动态, 变动, 订单, car-hail+, cost, price, duration, recommend+, suggest+, predict+, forcast+, period, time, schedul+, plan, order +, dynamic+, varia+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113408877 A (BEIJING BAIDU NETCOM SCIENCE AND TECHNOLOGY CO., LTD.) 17 September 2021 (2021-09-17) description, paragraphs 48-200 | 1-30 |
| X | CN 107844853 A (CHONGQING UNIVERSITY) 27 March 2018 (2018-03-27) description, paragraphs 2-8 and 14-18 | 1-30 |
| A | CN 111369025 A (BEIJING DIDI INFINITY TECHNOLOGY AND DEVELOPMENT CO., LTD.) 03 July 2020 (2020-07-03) entire document | 1-30 |
| A | CN 111178558 A (BEIJING DIDI INFINITY TECHNOLOGY AND DEVELOPMENT CO., LTD.) 19 May 2020 (2020-05-19) entire document | 1-30 |
| A | US 2017039667 A1 (NHN ENTERTAINMENT CORP.) 09 February 2017 (2017-02-09) entire document | 1-30 |

☑ Further documents are listed in the continuation of Box C.          ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 January 2022** | **18 February 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/131178** |

C.    DOCUMENTS CONSIDERED TO BE RELEVANT

| Category* | Citation of document, with indication, where appropriate, of the relevant passages | Relevant to claim No. |
| --- | --- | --- |
| A | CN 110737849 A (BEIJING BAIDU NETCOM SCIENCE AND TECHNOLOGY CO., LTD.) 31 January 2020 (2020-01-31) entire document | 1-30 |
| A | CN 109146280 A (BEIJING SANKUAI ONLINE TECHNOLOGY CO., LTD.) 04 January 2019 (2019-01-04) entire document | 1-30 |

Form PCT/ISA/210 (second sheet) (January 2015)

**INTERNATIONAL SEARCH REPORT**
Information on patent family members

International application No.

**PCT/CN2021/131178**

| Patent document cited in search report | | | Publication date (day/month/year) | Patent family member(s) | | | Publication date (day/month/year) |
|---|---|---|---|---|---|---|---|
| CN | 113408877 | A | 17 September 2021 | None | | | |
| CN | 107844853 | A | 27 March 2018 | None | | | |
| CN | 111369025 | A | 03 July 2020 | None | | | |
| CN | 111178558 | A | 19 May 2020 | CN | 111178558 | B | 12 March 2021 |
| US | 2017039667 | A1 | 09 February 2017 | JP | 2017033568 | A | 09 February 2017 |
| | | | | KR | 20170016537 | A | 14 February 2017 |
| CN | 110737849 | A | 31 January 2020 | US | 2021108930 | A1 | 15 April 2021 |
| CN | 109146280 | A | 04 January 2019 | WO | 2020034851 | A1 | 20 February 2020 |
| | | | | CN | 109146280 | B | 30 July 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110633451